# EUROPÄISCHE PATENTSCHRIFT

(11) **EP 0 672 583 B1**
(45) Veröffentlichungstag und Bekanntmachung des Hinweises auf die Patenterteilung: **22.04.1998**
(21) Anmeldenummer: 95100474.6
(22) Anmeldetag: 16.01.1995
(51) Int. Cl.: B64D 11/02

(54) **Vorrichtung zur Abwasserdrainage aus Flugzeugen**
Drainmast assembly for an aircraft
Dispositif de drainage pour avion

(30) Priorität: 14.03.1994 DE 4408493
(43) Veröffentlichungstag der Anmeldung: 20.09.1995
(73) Patentinhaber: Daimler-Benz Aerospace Airbus Gesellschaft mit beschränkter Haftung, 21129 Hamburg (DE)
(72) Erfinder: Frank, Helge, Dipl.-Ing., D-21147 Hamburg (DE)
(74) Vertreter: Hansmann, Dierk, Dipl.-Ing.

(56) Entgegenhaltungen:
- EP-A- 0 556 765
- WO-A-90/10492
- US-A- 2 984 107
- US-A- 4 275 603

## Beschreibung

Die Erfindung betrifft eine Vorrichtung zur Abwasserdrainage aus Flugzeugen gemäß dem Oberbegriff des Anspruchs 1 oder 8.

Es gehört zum Stand der Technik, zumindest eine Vorrichtung zur Drainage, bekannt als "Drainmast", an der Flugzeugunterseite anzuordnen und mit ihr das während des Fluges beispielsweise bei Benutzung von Handwaschbecken oder als Spülwasser in Bordküchen anfallende Schmutzwasser abzulassen. Mit dem Befestigungsflansch wird das Drainagerohr zusammen mit der Verkleidung an der Flugzeugunterseite angeschraubt. Die aerodynamisch günstig geformte Verkleidung läuft nach hinten schlank aus, so daß das auch nach hinten auslaufende und annähernd waagerechte Abflußende des Drainagerohres scharfkantig, in einem spitzen Winkel austritt. Damit ist gewährleistet, daß das Schmutzwasser verwirbelungsarm in einem bestimmten Abstand von der Flugzeughaut in den Luftstrom austritt und so vom Flugzeugrumpf ferngehalten wird. Bei kalter Flugzeugumgebung tritt aber das Problem der Vereisung auf. Um ein Vereisen der Drainagevorrichtung zu verhindern, ist eine elektrische Heizung auf das Drainagerohr aufgebracht, die über einen Temperatursensor geregelt ist. Die elektrische Heizung ist nur im inneren Bereich der Verkleidung auf das Drainagerohr aufgebracht, da das Drainagerohr einerseits zum Anschluß an das Wassersystem durch den Befestigungsflansch hindurch geführt wird und andererseits am spitzwinklig auslaufenden Abflußende aus Platzgründen eine elektrische Heizung auf dem Drainagerohr nicht möglich ist. Damit ist nur eine ungleichmäßige Wärmezufuhr entlang des Drainagerohres gewährleistet und es besteht die Gefahr, daß das Drainagerohr insbesondere am Endstück und im Bereich des Befestigungsflansches trotz einer intensiven Beheizung einfriert, weil diese Stellen der kalten Flugzeugumgebung ausgesetzt sind.
Die bislang verwendete Vorrichtung zur Abwasserdrainage aus Flugzeugen weist demzufolge den Nachteil auf, daß trotz intensiver Beheizung des Drainagerohres eine Gefährdung des Funktionsablaufs im gesamten Abwassersystem besteht, wenn die Drainagevorrichtung einfriert und so ein Ablassen von Abwasser während des Fluges nicht mehr gewährleistet ist.

Zwar zeigt die EP-A-0 556 765 ein Drainagerohr mit Heizelementen, die bis zum Abflußende des Rohres reichen, ein einfrieren im Bereich des Befestigungsflansches wird aber nicht wirksam vermieden.

Demgemäß liegt der Erfindung die Aufgabe zugrunde, eine gattungsgemäße Vorrichtung derart auszubilden, daß ein Einfrieren des Drainagerohres verhindert wird und ein Ablassen von Abwasser während des Fluges jederzeit gewährleistet ist und somit die Funktionsfähigkeit des gesamten Abwassersystems erhalten bleibt.

Diese Aufgabe ist bei einer gattungsgemäßen Vorrichtung durch die im kennzeichnenden Teil des Anspruches 1 oder 8 angegebenen Maßnahmen gelöst.

Weiterbildungen und zweckmäßige Ausgestaltungen ergeben sich aus den Unteransprüchen 2 bis 7 und 9 bis 11.

So wird mit der Ausgestaltung nach Anspruch 2 erreicht, daß ein ungewünschter Wärmeabfluß in die Flugzeugumgebung verhindert wird.

Durch die an sich bekannte Maßnahme nach Anspruch 5 kann erreicht werden, daß nur noch in den Bereichen hoher Wärmeabfuhr oberflächennahe Heizelemente an der VerKleidung nötig sind und so der Gesamtleistungsbedarf der Heizelemente gesenkt wird. Innerhalb der Verkleidung ist ein Aufbringen des Heizelementes unmittelbar auf das Drainagerohr wirkungsvoller.

Mit der Ausgestaltung nach den Ansprüchen 6 und 7 ergibt sich der Vorteil, daß einerseits die Festigkeit der gesamten Vorrichtung erhöht wird und andererseits auch ein Eindringen von Wasser in die Vorrichtung zur Abwasserdrainage verhindert wird.

Bei der Ausgestaltung nach Anspruch 9 besteht der Vorteil darin, daß eine im Flugzeug vorhandene Energie- und Wärmequelle wirkungsvoll ausgenutzt wird, um die notwendige Heizluft zur Verfügung zu stellen.

Mit der Ausbildung nach Anspruch 10 kann eine genaue Anpassung des notwendigen Wärmebedarfs an die Umgebungsbedingungen realisiert werden.

Die Erfindung wird nachstehend beschrieben und anhand der Figuren 1 - 4 näher erläutert.

Es zeigen
- Fig. 1: eine erste Ausgestaltung einer Vorrichtung zur Abwasserdrainage aus Flugzeugen,
- Fig. 2: eine zweite Ausgestaltung der Vorrichtung zur Abwasserdrainage aus Flugzeugen,
- Fig. 3: den Schnitt A-A gemäß Fig. 1 und
- Fig. 4: eine dritte Ausgestaltung der Vorrichtung zur Abwasserdrainage aus Flugzeugen.

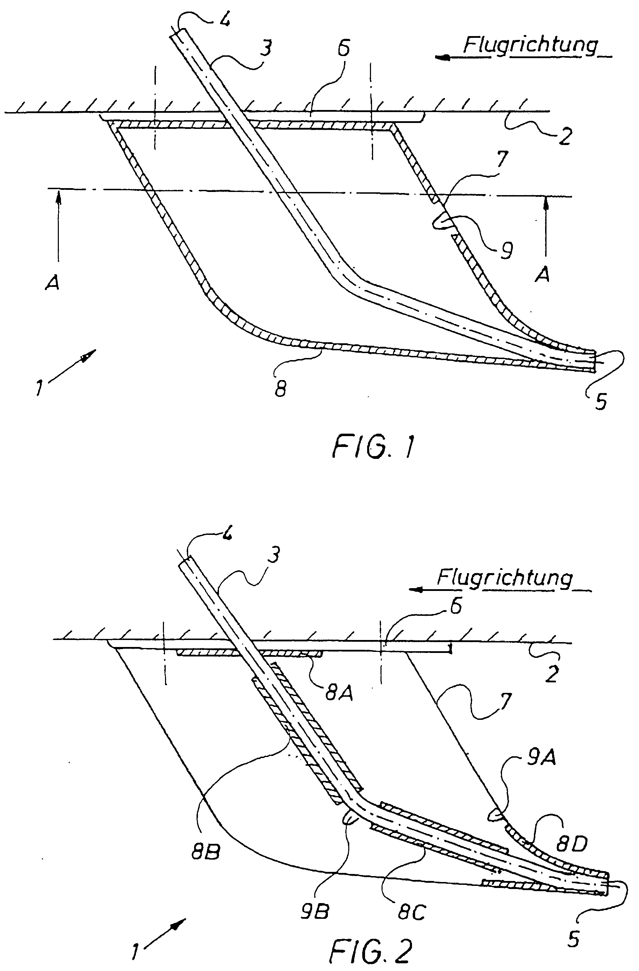

In Fig. 1 ist eine erste Ausgestaltung einer Vorrichtung zur Abwasserdrainage 1 aus Flugzeugen gezeigt. Eine derartige Vorrichtung 1 ist an der Flugzeugunterseite 2 vorgesehen, um das anfallende Schmutzwasser, beispielsweise aus den Bordkuchen oder Handwaschbecken im Toilettenbereich, über Bord abzulassen. Die Vorrichtung zur Abwasserdrainage 1 besteht im wesentlichen aus einem Drainagerohr 3, dessen Zuflußende 4 an ein Abwassersystem im Flugzeug angeschlossen ist und dessen Abflußende 5 nach hinten, d. h. entgegen der Flugrichtung, geöffnet ist. Das Abflußende 5 des Drainagerohres 3 liegt mit seiner Längsachse annähernd parallel zu dem während des Fluges auftretenden Luftstrom. Das Drainagerohr 3 ist von einer aerodynamisch günstig ausgebildeten Verkleidung 7 umhüllt. Die aerodynamisch günstige Verkleidung 7 läuft nach hinten schlank aus, so daß das auch nach hinten auslaufende Abflußende 5 des Drainagerohres 3 scharfkantig, in einem spitzen Winkel austritt. Mit einem Befestigungsflansch 6 wird die Vorrichtung 1 an der Flugzeugunterseite 2 angeschraubt. Bei dieser Ausgestaltung ist das eigentliche Drainagerohr 3 nicht beheizt. Vielmehr ist die gesamte Innenfläche der aerodynamisch günstigen Verkleidung 7 mit Heizelementen 8 versehen. Vorzugsweise sind die Heizelemente 8 als elektrisch betriebene Film- oder Drahtwiderstandsheizelemente ausgebildet. Ein Temperatursensor 9, der auf der Oberfläche der Verkleidung 7 aufgebracht ist und vorzugsweise nicht im direkten Kontakt mit den Heizelementen 8 steht, mißt die vorhandene Temperatur, um dann über einen Temperaturregler die Heizelemente 8 so zu regeln, daß das Drainagerohr 3 über seine gesamte Länge von einer warmen Verkleidung umgeben ist und immer eine Temperatur über den Gefrierpunkt am gesamten Drainagerohr 3 gewährleistet ist. Die gesamte beheizte Fläche ist gleichmäßig der Wärmeabführ durch den umgebenden Luftstrom ausgesetzt, so daß keine lokale Unterkühlung auftritt.

In Fig. 2 ist eine zweite Ausgestaltung der Vorrichtung zur Abwasserdrainage 1 dargestellt. Im wesentlichen Aufbau entspricht sie der Vorrichtung 1 gemäß Fig. 1. In der zweiten Ausgestaltung sind die oberflächennah aufgebrachten Heizelemente 8 auf die einer besonders hohen Wärmeabfuhr ausgesetzten Bereiche beschränkt. Vorzugsweise ist dies einerseits der Bereich der Durchführung des Drainagerohres 3 durch den Befestigungsflansch 6 zum Anschluß an das Abwassersystem und andererseits der Bereich des Abflußendes 5 des Drainagerohres 3. In diesen Bereichen sind Heizelemente 8A und 8D oberflächennah an der Innenfläche der Verkleidung 7 aufgebracht, vorzugsweise als elektrisch betriebene Film- oder Drahtwiderstandsheizelemente. Die Beheizung der restlichen Bereiche wird in bekannter Art ausgeführt, d. h. Heizelemente 8B und 8C sind im Inneren der Verkleidung 7 direkt auf das Drainagerohr 3 aufgeklebt. Temperatursensoren 9A und 9B erfassen die Temperatur innerhalb der Vorrichtung 1 an Meßstellen entweder direkt am Drainagerohr 3 oder in der Nähe des beheizten Bereiches der VerKleidung 7 oder an beiden Meßstellen und über Temperaturregler wird immer eine Temperatur über den Gefrierpunkt realisiert, um ein Vereisen zu verhindern. Mit dieser Ausgestaltung kann durch vorteilhafte Kombination der Heizelemente 8A bis 8D der Gesamtleistungsbedarf der Drainagevorrichtung gesenkt werden.

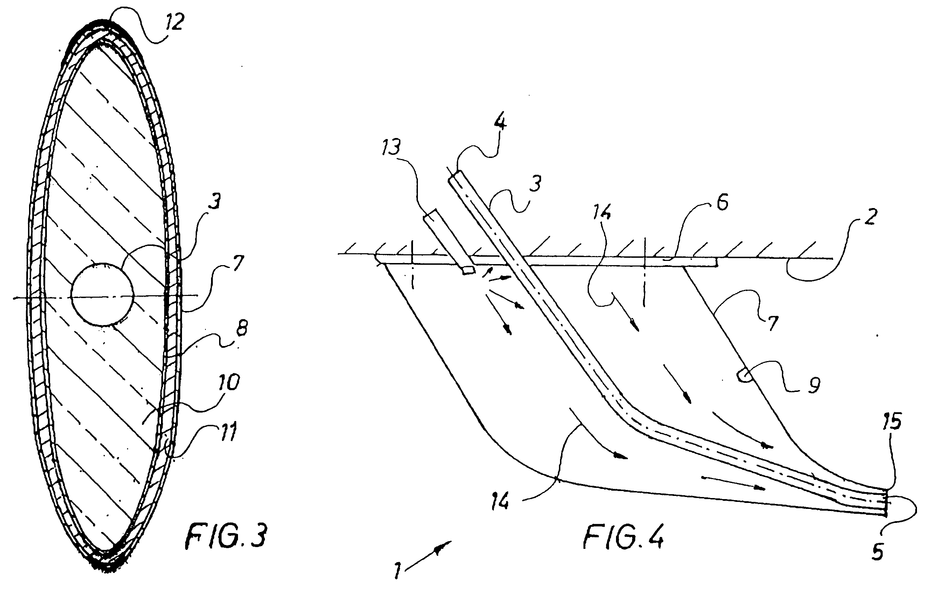

Die Fig. 3 zeigt einen um 90° gedrehten Querschnitt längs der Ebene A-A gemäß Fig. 1. Das Drainagerohr 3 ist von einem Stützkern 10 umgeben, der sowohl der Festigung des umhüllenden Heizelementes 8 mit einer daran angeordneten Isolierschicht 11 und der umhüllenden Verkleidung 7 dient, als auch ein Eindringen von Wasser in die Vorrichtung zur Abwasserdrainage 1 verhindert.
Der Stützkern 10 besteht vorzugsweise aus Hartschaummaterial, wie z. B. Hartschaum auf Polyurethanbasis, das durch das Aufschäumen die Freiräume der gesamten Vorrichtung 1 ausfüllt. Auf dem Stützkern 10 ist das Heizelement 8 durch Kleben oder Einlaminieren aufgebracht, wobei das vorzugsweise als Drahtwiderstandsheizelement ausgebildete Heizelement 8 den gesamten Stützkern 10 umhüllt.

Zur Minimierung des Wärmeabflusses vom Heizelement 8 ist dieses von einer Isolierschicht 11 umgeben. Die VerKleidung 7 umschließt die zur Vorrichtung zur Abwasserdrainage 1 gehörenden Teile und besteht aus einem harten, polierfähigen Material, um alle Teile vor Beschädigungen zu schützen und den durch die Oberflächenreibung hervorgerufenen aerodynamischen Widerstand zu minimieren. In einer bevorzugten Ausgestaltung sind glasfaser- bzw. kohlefaserverstärkte Kunststoffe einsetzbar.
Im Bereich des Auftreffens des Luftstromes auf die VerKleidung 7 ist zum Schutz der Vorrichtung zur Abwasserdrainage 1 eine Nasenleiste 12 angeordnet, die die Verkleidung 7 in diesem Bereich verstärkt. Einsetzbare Materialien für diesen Zweck sind beispielsweise im Flugzeugbau übliche metallische Werkstoffe oder aramid-oder kohlefaserverstärkte Kunstoffe.

In Fig. 4 ist eine Variante der Vorrichtung zur Abwasserdrainage 1 ersichtlich. Diese Vorrichtung zur Abwasserdrainage 1 besteht im wesentlichen aus dem Drainagerohr 3, dessen Zuflußende 4 an das Abwassersystem im Flugzeug angeschlossen ist und dessen Abflußende 5 nach hinten, d. h. entgegen der Flugrichtung, geöffnet ist. Das Abflußende 5 des Drainagerohres 3 liegt mit seiner Längsachse annähernd parallel zu dem während des Fluges auftretenden Luftstrom. Das Drainagerohr 3 ist von der aerodynamisch günstig ausgebildeten Verkleidung 7 umhüllt. Die aerodynamisch günstige Verkleidung 7 läuft nach hinten schlank aus, so daß das auch nach hinten auslaufende Abflußende 5 des Drainagerohres 3 scharfkantig, in einem spitzen Winkel austritt. Mit dem Befestigungsflansch 6 wird die Vorrichtung 1 an der Flugzeugunterseite 2 angeschraubt. In dieser Ausgestaltung wird das Drainagerohr 3 und auch die Verkleidung 7 nicht direkt beheizt. Ein Heizlufteingang 13 gibt einen Heizluftstrom 14 innerhalb der Verkleidung 7 ab. Der Heizlufteingang 13 ist an der Flugzeugunterseite 2 innerhalb der Verkleidung 7 angeordnet und in der bevorzugten Ausgestaltung als Regelventil ausgebildet. Entsprechend der mit dem Temperatursensor 9 ermittelten Umgebungstemperatur kann somit der notwendige Heizluftstrom 14 regelbar sein. Die Strömungsrichtung ist so gewählt, daß die durch Einfrieren gefährdeten Bereiche des Drainagerohres 3 von Heizluft vollständig umströmt werden. Vorzugsweise ist die Heizluftabgeabeeinrichtung 13 an einer Triebwerkszapfluftentnahme eines Triebwerkes angeschlossen. Ein geringer Teil der Zapfluft, die im Flugzeug im wesentlichen in verschiedenen Systemen als Energie-, Wärme- oder Frischluftquelle genutzt wird, kann somit auch für die
Beheizung der Vorrichtung zur Abwasserdrainage 1 nützlich sein. Der Heizluftstrom 14 umströmt das Drainagerohr 3 und tritt im Bereich des Abflußendes 5 aus der Verkleidung 7 wieder aus. Dieser Heizluftausgang 15 ist in der bevorzugten Ausgestaltung als Ringspalt im hinteren Bereich der Verkleidung 7 um das Abflußende 5 des Drainagerohres 3 herum ausgebildet.

### Bezugszeichenliste

- 1: - Vorrichtung zur Abwasserdrainage aus Flugzeugen
- 2: - Flugzeugunterseite
- 3: - Drainagerohr
- 4: - Zuflußende
- 5: - Abflußende
- 6: - Befestigungsflansch
- 7: - aerodydnamisch günstige Verkleidung
- 8, 8A bis 8D: - Heizelement
- 9, 9A, 9B: - Temperatursensor
- 10: - Kern
- 11: - Isolierschicht
- 12: - Nasenleiste
- 13: - Heizlufteingang
- 14: - Heizluftstrom
- 15: - Heizluftausgang

## Patentansprüche

1. Vorrichtung (1) zur Abwasserdrainage aus Flugzeugen, die an der Flugzeugunterseite angeordnet ist, bestehend aus
(a) einem von einem Befestigungsflansch (6) getragenen Drainagerohr (3), dessen Zuflußende (4) an das Abwassersystem im Flugzeug angeschlossen ist und dessen nach hinten offenes Abflußende (5) mit seiner Längsachse annähernd parallel zum Luftstrom verläuft,
(b) einer das Drainagerohr (3) umhüllenden aerodynamisch günstigen Verkleidung (7),
(c) mindestens einem von einem Temperatursensor (9) überwachten Heizelement (8), das im Bereich der Durchführung des Abflußendes (5) durch die Verkleidung (7) oberflächennah innerhalb der Verkleidung (7) angeordnet ist,
**dadurch gekennzeichnet, daß**
das bzw. ein weiteres Heizelement (8, 8A, 8D) zumindest im Bereich der Durchführung des Drainagerohres (3) durch den Befestigungsflansch (6) am Befestigungsflansch und oberflächennah innerhalb der Verkleidung (7) angeordnet ist.

2. Vorrichtung nach Anspruch 1,
**dadurch gekennzeichnet, daß**
zwischen der Verkleidung (7) und dem Heizelement (8) eine Isolierschicht (11) angeordnet ist.

3. Vorrichtung nach Anspruch 1 oder 2,
**dadurch gekennzeichnet, daß**
das Heizelememt (8) als elektrisches Filmwiderstandsheizelement ausgebildet ist.

4. Vorrichtung nach Anspruch 1 oder 2,
**dadurch gekennzeichnet, daß**
das Heizelememt (8) als elektrisches Drahtwiderstandsheizelement ausgebildet ist.

5. Vorrichtung nach einem der Ansprüche 1 bis 4,
**dadurch gekennzeichnet, daß**
mindestens ein zusätzliches Heizelement (8B, 8C) innerhalb der Verkleidung (7) am Drainagerohr (3) angeordnet ist.

6. Vorrichtung nach einem der Ansprüche 1 bis 5,
**dadurch gekennzeichnet, daß**
das Drainagerohr (3) von einem Stützkern (10) umgeben ist.

7. Vorrichtung nach Anspruch 6,
**dadurch gekennzeichnet, daß**
der Stützkern (10) aus Hartschaum besteht.

8. Vorrichtung zur Abwasserdrainage aus Flugzeugen nach den Merkmalen (a) und (b) des Anspruchs 1,
**dadurch gekennzeichnet, daß**
an der Flugzeugunterseite (2) innerhalb der Verkleidung (7) ein Heizlufteingang (13) und im Bereich des Abflußendes (5) des Drainagerohres (3) ein Heizluftausgang (15) in der Verkleidung (7) vorgesehen sind.

9. Vorrichtung nach Anspruch 8,
**dadurch gekennzeichnet, daß**
der Heizlufteingang (13) an eine Triebwerkszapfluftentnahme am Triebwerk angeschlossen ist.

10. Vorrichtung nach Anspruch 8 oder 9,
**dadurch gekennzeichnet, daß**
der Heizlufteingang (13) als ein regelbares Ventil ausgebildet ist, der entsprechend der mit einem Temperatursensor (9) ermittelten Umgebungstemperatur den Heizluftstrom (14) regelt.

11. Vorrichtung nach einem der Ansprüche 8 bis 10,
**dadurch gekennzeichnet, daß**
der Heizluftausgang (15) als Ringspalt in der Verkleidung (7) um das Abflußende (5) des Drainagerohres (3) herum ausgebildet ist.

## Claims

1. Drainmast assembly for aircraft, which is disposed at the underside of the aircraft, comprising
(a) a waste pipe, which is supported by a fastening flange and of which the inlet end is connected to the waste water system in the aircraft and the rear-opening outlet end extends with its longitudinal axis substantially parallel to the air stream,
(b) an aerodynamically advantageous fairing which encloses the waste pipe,
(c) at least one heating element, which is monitored by a temperature detector and disposed close to the surface inside the fairing (7) in the region where the outlet end (5) passes through the fairing (7),
**characterized in that**
the heating element or a further heating element (8, 8A, 8D) is disposed at least in the region where the waste pipe (3) passes through the fastening flange (6) at the fastening flange disposed close to the surface inside the fairing (7).

2. Assembly according to claim 1
**characterized in that**
an insulating layer (11) is disposed between the fairing (7) and the heating element (8).

3. Assembly according to claim 1 or 2,
**characterized in that**
the heating element (8) takes the form of an electrical film-resistor heating element.

4. Assembly according to claim 1 or 2,
**characterized in that**
the heating element (8) takes the form of an electrical wire-resistor heating element.

5. Assembly according to one of claims 1 to 4,
**characterized in that**
at least one additional heating element (8B, 8C) is disposed inside the fairing (7) on the waste pipe (3).

6. Assembly according to one of claims 1 to 5,
**characterized in that**
the waste pipe (3) is surrounded by a supporting core (10).

7. Assembly according to claim 6,
**characterized in that**
the supporting core (10) is made of rigid foam.

8. Drainmast assembly for aircraft according to the features (a) and (b) of claim 1,
**characterized in that**
provided in the fairing (7) are a hot-air inlet (13) inside the fairing (7) at the underside (2) of the aircraft and a hot-air outlet (15) in the region of the outlet end (5) of the waste pipe (3).

9. Assembly according to claim 8,
**characterized in that**
the hot-air inlet (13) is connected to a power unit discharge air output of the power unit.

10. Assembly according to claim 8 or 9,
**characterized in that**
the hot-air inlet (13) takes the form of a controllable valve which regulates the hot-air flow (14) in accordance with the ambient temperature determined by a temperature detector (9).

11. Assembly according to one of claims 8 to 10,
**characterized in that**
the hot-air outlet (15) takes the form of an annular gap in the fairing (7) around the outlet end (5) of the waste pipe (3).

## Revendications

1. Dispositif destiné au drainage des eaux usées des avions, qui est disposé sur le dessous de l'avion et qui se compose
(a) d'un tuyau de drainage soutenu par une flasque de fixation, dont l'extrémité d'entrée est connectée au système des eaux usées dans l'avion et dont l'extrémité de décharge ouverte vers l'arrière s'étend avec son axe longitudinal plus ou moins parallèlement au courant d'air,
(b) d'un revêtement aérodynamique entourant le tuyau de drainage,
(c) de au moins un élément de chauffage contrôlé par un détecteur de température, qui est disposé près de la surface à l'intérieur du revêtement (7) dans la zone où l'extrémité de décharge (5) traverse le revêtement (7),
**caractérisé en ce que**
l'élément de chauffage respectivement un autre élément de chauffage (8, 8A, 8D) est au moins disposé dans la zone où le tuyau de drainage (3) traverse la flasque de fixation (6) contract la flasque de fixation dans la zone où l'extrémité de décharge (5) traverse le revêtement (7).

2. Dispositif suivant la revendication 1,
**caractérisé en ce que**
entre le revêtement (7) et l'élément de chauffage (8) est disposée une couche isolante (11).

3. Dispositif suivant la revendication 1 ou 2,
**caractérisé en ce que**
l'élément de chauffage (8) est conçu comme un élément de chauffage électrique à résistance pelliculaire.

4. Dispositif suivant la revendication 1 ou 2,
**caractérisé en ce que**
l'élément de chauffage (8) est conçu comme un élément de chauffage électrique à résistance bobinée.

5. Dispositif suivant l'une ou l'autre des revendications 1 à 4,
**caractérisé en ce que**
au moins un élément de chauffage supplémentaire (8B, 8C) est disposé à l'intérieur du revêtement (7) sur le tuyau de drainage (3).

6. Dispositif suivant l'une ou l'autre des revendications 1 à 5,
**caractérisé en ce que**
le tuyau de drainage (3) est entouré par un noyau d'appui (10).

7. Dispositif suivant la revendication 6,
**caractérisé en ce que**
le noyau d'appui (10) se compose de mousse dure.

8. Dispositif destiné au drainage des eaux usées des avions suivant les caractéristiques (a) et (b) de la revendication 1,
**caractérisé en ce que**
sur le dessous (2) de l'avion, à l'intérieur du revêtement (7), est prévue une entrée d'air chaud (13) et en ce que dans la zone de l'extrémité de décharge (5) du tuyau de drainage (3) est prévue dans le revêtement (7) une sortie d'air chaud (15).

9. Dispositif suivant la revendication 8,
**caractérisé en ce que**
l'entrée d'air chaud (13) est connectée à une prise d'air de distribution du groupe motopropulseur sur le groupe motopropulseur.

10. Dispositif suivant la revendication 8 ou 9,
**caractérisé en ce que**
l'entrée d'air chaud (13) est conçue comme une soupape réglable qui, suivant la température ambiante transmise au moyen d'un détecteur de température (9), règle le courant d'air chaud (14).

11. Dispositif suivant l'une ou l'autre des revendications 8 à 10,
**caractérisé en ce que**
la sortie d'air chaud (15) est conçue comme une fente annulaire dans le revêtement (7) tout autour de l'extrémité de décharge (5) du tuyau de drainage (3).
